Europäisches Patentamt

European Patent Office

Office européen des brevets

(19)

(11) Numéro de publication : **0 452 228 A1**

(12)

# DEMANDE DE BREVET EUROPEEN

(21) Numéro de dépôt : 91420100.9

(51) Int. Cl.⁵ : **H02K 1/00**

(22) Date de dépôt : 26.03.91

(30) Priorité : 11.04.90 FR 9004915

(43) Date de publication de la demande :
**16.10.91 Bulletin 91/42**

(84) Etats contractants désignés :
**BE CH DE ES GB IT LI SE**

(71) Demandeur : **MERLIN GERIN**
**2, chemin des Sources**
**F-38240 Meylan (FR)**

(72) Inventeur : **Martin, Eric**
**Merlin Gerin, Sce. Brevets**
**F-38050 Grenoble Cedex (FR)**
Inventeur : **Roux, Christian**
**Merlin Gerin, Sce. Brevets**
**F-38050 Grenoble Cedex (FR)**

(74) Mandataire : **Kern, Paul et al**
**Merlin Gerin Sce. Brevets 20, rue Henri Tarze**
**F-38050 Grenoble Cédex (FR)**

(54) **Relais de protection d'un réseau électrique moyenne tension.**

(57)    Les enroulements primaires (15,20) de transformateurs réducteurs (13,14) d'entrée d'un relais de protection d'un réseau électrique moyenne tension sont blindés au moyen d'un blindage amagnétique de manière à protéger l'ensemble électronique de traitement (12) du relais vis à vis des perturbations électromagnétiques.

EP 0 452 228 A1

Fig.1

L'invention concerne un relais de protection d'un réseau électrique moyenne tension, disposé dans un boîtier comportant au moins une partie conductrice, et comportant des entrées sur lesquelles sont appliqués des signaux d'entrée analogiques représentatifs de paramètres électriques dudit réseau, un ensemble électronique de traitement des signaux d'entrée et un transformateur réducteur, associé à chaque entrée, comportant un enroulement primaire connecté à ladite entrée et un enroulement secondaire connecté à l'ensemble électronique de traitement.

Les circuits électroniques, et plus particulièrement les circuits électroniques numériques sont très sensibles aux variations de champs électromagnétiques produits par l'environnement moyenne tension. L'introduction de déclencheurs électroniques, notamment de déclencheurs à microprocesseur, pour la protection de réseaux électriques moyenne tension, pose des problèmes dûs à l'influence de perturbations électromagnétiques sur les circuits électroniques du déclencheur.

L'invention a pour but de limiter ces perturbations avec des moyens simples, peu coûteux et peu encombrants.

Selon l'invention, ce but est atteint par le fait que l'enroulement primaire d'un transformateur réducteur, constitué par un conducteur connectant deux bornes de l'entrée associée, est blindé par un matériau amagnétique, ledit blindage étant connecté à ses deux extrémités à une partie conductrice du boîtier, mise à la masse.

Ce blindage, constitué de préférence par une tresse en matériau amagnétique, constitue une cage de Faraday d'encombrement réduit et très bon marché, permettant de limiter les perturbations électromagnétiques, par couplage capacitif, ainsi que les perturbations dues au champ magnétique basse fréquence ou au champ électrique basse fréquence susceptibles d'affecter l'ensemble électronique de traitement.

Selon un mode de réalisation préférentiel ladite partie conductrice, par exemple métallique est constituée par une paroi externe du boîtier sur laquelle sont disposées lesdites entrées.

Les enroulements primaires de tous les transformateurs réducteurs du relais, qu'il s'agisse de transformateurs de courant ou de tension, peuvent être blindés. Cependant il est possible, tout en obtenant des résultats satisfaisants, de se limiter au blindage des enroulements primaires des transformateurs de courant.

D'autres avantages et caractéristiques ressortiront plus clairement de l'exposé qui va suivre d'un mode particulier de réalisation de l'invention, donné à titre d'exemple non limitatif et représenté aux dessins annexés sur lesquels:

La figure 1 représente schématiquement un relais selon l'invention.

Les figures 2 et 3 illustrent respectivement une entrée d'un signal de courant et une entrée d'un signal de tension.

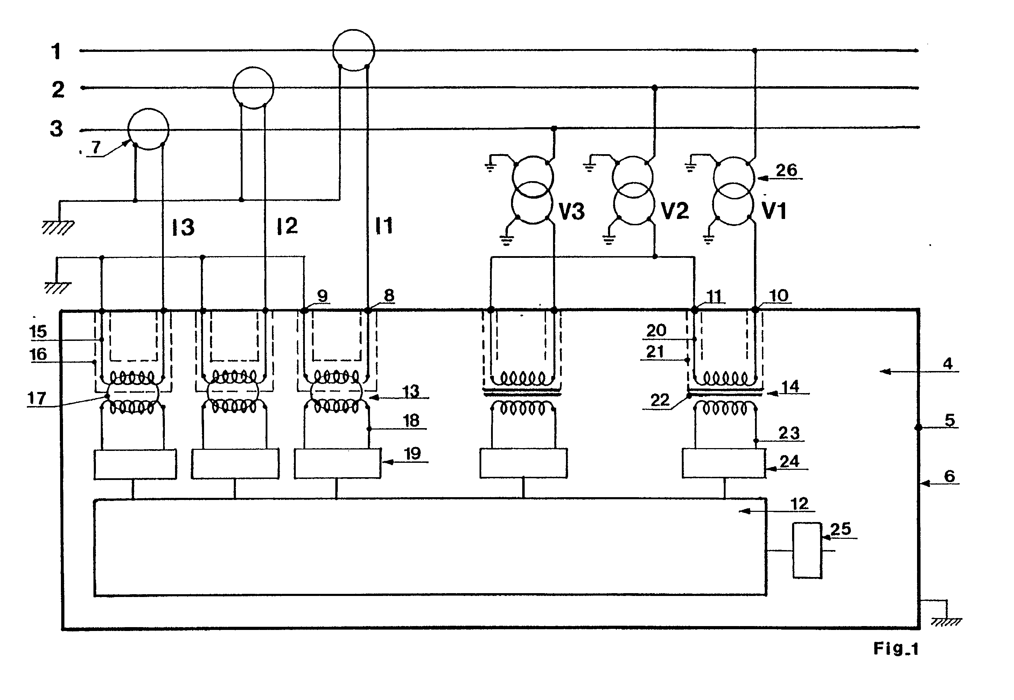

Sur la figure 1, un relais destiné à protéger un réseau électrique triphasé moyenne tension, comportant trois conducteurs de phase 1,2 et 3, comporte un déclencheur électronique 4.

Le déclencheur 4 est disposé dans un boîtier 5 dont une paroi externe 6, conductrice, est mise à la masse. La paroi 6 est une paroi métallique mais peut être constituée d'une paroi en matière plastique chargée en matière conductrice ou recouverte d'une peinture métallisée.

Des signaux analogiques d'entrée, respectivement représentatifs des courants I1,I2,I3, parcourant les conducteurs et des tensions V1,V2,V3 des conducteurs du réseau, sont appliqués à des entrées du déclencheur. Un signal d'entrée de courant, I1,I2 ou I3, est classiquement obtenu au moyen d'un transformateur de courant 7 dont l'enroulement primaire est constitué par le conducteur considéré et dont l'enroulement secondaire est connecté à la masse par une extrémité et à une première borne 8 de l'entrée associée par l'autre extrémité. Les secondes bornes 9 des entrées de courant sont toutes connectées à la masse. De même, un signal d'entrée de tension, V1,V2 ou V3, est obtenu au moyen d'un transformateur de tension 26 dont l'enroulement est connecté à une extrémité au conducteur considéré et à l'autre extrémité à la masse. Le secondaire du transformateur 26 est connecté à une extrémité aux bornes 10 pour V1 et V3 et aux bornes 11 pour V2, l'autre extrémité du secondaire du transformateur 26 étant connectée à la masse.

Les bornes d'entrée 8,9,10,11, sont de préférence disposées sur la paroi métallique externe 6 du boîtier.

Les courants et les tensions d'entrée sont trop élevés pour être traités directement par l'ensemble électronique de traitement 12 du déclencheur. A titre d'exemple nullement limitatif, les signaux de courant ont généralement une intensité de l'ordre de quelques ampères, typiquement 1 à 5A, tandis que les signaux de tension peuvent être de l'ordre de la centaine de volts. Un transformateur réducteur est donc interposé entre chaque entrée et l'ensemble électronique de traitement.

Des transformateurs réducteurs de courant 13 sont associés aux entrées 8,9 de courant, tandis que des transformateurs réducteurs de tension 14 sont associés aux entrées 10,11 de tension.

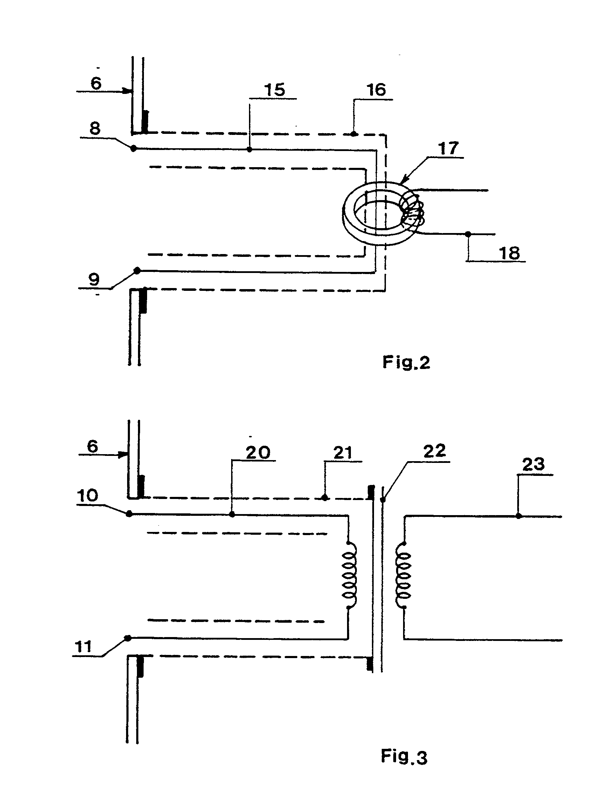

L'enroulement primaire 15 d'un transformateur réducteur de courant 13, connecté aux bornes 8 et 9 de l'entrée associée, est blindé sur toute sa longueur par un blindage 16 en matériau amagnétique, de préférence constitué par une tresse. a titre d'exemple non limitatif, une tresse de cuivre étamé. Les deux extrémités du blindage sont connectées à la paroi métallique 6, mise à la masse par tout moyen approprié, par exemple au moyen d'une vis autotaraudeuse ou d'un système de vis-écrou. La figure 2 illustre plus en détail le conducteur blindé 15,16, traversant le noyau torique 17 du transformateur de courant. L'enroulement secondaire 18 du transformateur 13 est connecté à un circuit 19 de mise en forme dont la sortie est connectée à une entrée de l'ensemble électronique de traitement 12. Dans le mode de réalisation représenté sur la figure 2, le primaire 15 du transformateur de courant 13 forme une spire unique traversant le tore 17. Bien entendu si le courant d'entrée est plus faible, le primaire 15 peut comporter plusieurs spires.

De manière analogue, l'enroulement primaire 20 d'un transformateur réducteur de tension 14, connecté aux bornes 10 et 11, est blindé par un blindage 21 en matériau amagnétique. Selon un mode de réalisation préférentiel représenté à la figure 3, seule est blindée la partie de l'enroulement primaire 20 allant des bornes d'entrée 10 ou 11 au début du bobinage de l'enroulement sur le noyau du transformateur. Les spires ne sont pas blindées et le blindage 21 est connecté, par tout moyen approprié, d'une part à la paroi métallique 6 et d'autre part à un écran électrique isolant 22, mis à la masse, séparant les enroulements primaire 20 et secondaire 23. Les dimensions relatives de la partie blindée du conducteur 20 et de la partie non blindée doivent être telles que le blindage constitue néanmoins une cage de Faraday. A titre d'exemple, ce type de blindage est suffisant dans la pratique, pour un transformateur de tension 14 dans lequel la dimension transversale recouverte de spires est de l'ordre du centimètre, tandis que la longueur du conducteur allant des bornes d'entrée 10 ou 11, à la partie constituant les spires est de l'ordre de la dizaine de centimètres.

L'enroulement secondaire 23 du transformateur 14 est connecté à l'ensemble électronique de traitement 12 par l'intermédiaire d'un circuit de mise en forme 24.

Le blindage selon l'invention est plus particulièrement approprié dans le cas d'un déclencheur 4 dont l'ensemble électronique de traitement comporte un microprocesseur, les signaux analogiques d'entrée étant multiplexés puis transformés en signaux numériques avant d'être traités par le microprocesseur.

L'ensemble électronique de traitement 12 réalise notamment des fonctions de protection et peut transmettre des ordres de déclenchement et d'enclenchement à un relais de déclenchement schématisé en 25 sur la figure 1.

## Revendications

1. Relais de protection d'un réseau électrique moyenne tension, disposé dans un boîtier (5) comportant au moins une partie conductrice (6), et comportant des entrées sur lesquelles sont appliqués des signaux d'entrée analogiques représentatifs de paramètres électriques (I1,I2,I3,V1,V2,V3) dudit réseau, un ensemble électronique (12) de traitement des signaux d'entrée et un transformateur réducteur (13,14), associé à chaque entrée, comportant un enroulement primaire (15,20) connecté à ladite entrée et un enroulement secondaire (18,23) connecté à l'ensemble électronique (12) de traitement, relais caractérisé en ce que l'enroulement primaire (15,20) d'un transformateur réducteur, constitué par un conducteur connectant deux bornes (8,9; 10,11) de l'entrée associée, est blindé par un matériau amagnétique (16,21), ledit blindage étant connecté à ses deux extrémités à une partie conductrice (6) du boîtier, mise à la masse.

2. Relais selon la revendication 1, caractérisé en ce que le blindage est constitué par une tresse (16,21) en matériau amagnétique.

3. Relais selon l'une des revendications 1 et 2, caractérisé en ce que ladite partie conductrice est constituée par une paroi externe (6) du boîtier (5) sur laquelle sont disposées lesdites entrées.

4. Relais selon l'une quelconque des revendications 1 à 3, caractérisé en ce que, un premier signal d'entrée (I1,I2,I3) étant représentatif du courant parcourant un conducteur (1,2,3) du réseau, le transformateur réducteur (13) associé est un transformateur de courant à noyau torique (17) dont l'enroulement primaire (15) est blindé.

5. Relais selon la revendication 4, caractérisé en ce que le primaire (15) du transformateur de courant (13) forme une spire unique.

6. Relais selon l'une quelconque des revendications 1 à 5, caractérisé en ce que, un second signal d'entrée (V1,V2,V3) étant représentatif de la tension d'un conducteur (1,2,3) du réseau, le transformateur réducteur (14) associé est un transformateur de tension dont l'enroulement primaire (20) est blindé.

7. Relais selon la revendication 6, caractérisé en ce que le transformateur de tension (14) comporte un écran électrique isolant (22) entre ses enroulements primaire (20) et secondaire (23), le blindage (21) de l'enroulement primaire (20) étant connecté à l'écran (22) mis à la masse.

8. Relais selon l'une quelconque des revendications 1 à 7, caractérisé en ce que l'ensemble électronique de traitement (12) est un déclencheur à microprocesseur.

9. Relais selon l'une quelconque des revendications 1 à 8, caractérisé en ce que ladite partie conductrice est une paroi métallique (6) du boîtier.

Fig.1

EP 0 452 228 A1

Fig.2

Fig.3

Office européen
des brevets

**RAPPORT DE RECHERCHE EUROPEENNE**

Numero de la demande

EP 91 42 0100

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DOCUMENTATION DES PRODUITS SIEMENS 1972, pages 1-13, DE; "Ueberstromzeitschutzsystem" * pages 3,8 * | 1,2 | H 02 H    1/00 |
| A | idem --- | 3-9 | |
| Y | ELEKTRONIK vol. 23, no. 4, 1974, page 130, München, DE; R. BOLL: "Flexible magnetische Abschirmschläuche" * page 130 * --- | 1,2 | |
| A | DE-B-1 291 413  (HITACHI) * revendication 1; figure 1 * --- | 1,2 | |
| A | DE-C- 850 488  (UTINA-ELEKTROWERK) * page 2, lignes 35-74 * --- | 1 | |
| A | EP-A-0 313 739  (VDO AKOLF SCHINDLING) * abrégé; figure 3 * --- | 1 | DOMAINES TECHNIQUES RECHERCHES (Int. Cl.5) |
| A | DE-A-2 514 583  (SIEMENS AG) * page 1, ligne 1 - page 2, ligne 21; figure 1 * ----- | 1 | H 02 H    1/00 |

Le présent rapport a été établi pour toutes les revendications

| Lieu de la recherche | Date d'achèvement de la recherche | Examinateur |
|---|---|---|
| BERLIN | 19-06-1991 | LEMMERICH J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8